# EUROPEAN PATENT APPLICATION

(11) **EP 4 717 487 A1**
(43) Date of publication of application: **01.04.2026**
(21) Application number: 24203223.3
(22) Date of filing: 27.09.2024
(51) Int. Cl.: B60K 11/02, B60H 1/32

(54) **THERMAL MANAGEMENT SYSTEM WITH INTEGRATED E-AXLE COOLING**

(71) Applicant: ZF Friedrichshafen AG, 88046 Friedrichshafen (DE)
(72) Inventor: DONG, Ye, Shanghai, 201615 (CN); Larbig, Julian, 37296 Ringgau (DE); Rohm, Axel, 97453 Schonungen (DE)

(57) **Abstract**

A thermal management system for an electric or hybrid vehicle comprises:

a first refrigerant circuit (2) with a first refrigerant, comprising a cooling device, which is a heat pump system (1) with at least one compressor (21), a first heat exchange means (23), particularly an evaporator (23), a second heat exchange means, particularly a condenser (24), and an expansion valve (22),

a first coolant circuit, which is a low temperature circuit (3), in particular a cooling water circuit, which flows through the evaporator (23), a second coolant circuit, which is a high temperature circuit (4), which flows through the condenser (21).

The thermal management system further comprises an e-axle cooling system (5) integrated with the heat pump system (1), the e-axle cooling system (5) comprising a second refrigerant cycle (6) with a second refrigerant.

## Description

### FIELD OF THE INVENTION

The present invention relates to a thermal management system, particularly for a vehicle, particularly an electro- or hybrid vehicle, a vehicle comprising said thermal management system, and method for managing thermal loads in a vehicle.

### BACKGROUND OF THE INVENTION

In today's world, efficient thermal management in vehicles, particularly in electric and hybrid vehicles, is of paramount importance. Traditional thermal management systems in vehicles typically include a heat pump with a refrigerant circuit that comprises components such as a compressor, an expansion valve, an evaporator, and a condenser. These systems are designed to regulate the temperature within the vehicle cabin and to cool the batteries and other electrical components.

However, as the complexity and performance demands of modern vehicles continue to grow, conventional thermal management systems are encountering significant challenges. One of the primary issues is the effective cooling of the e-axle, which integrates the electric motor and power electronics. The e-axle generates substantial heat during operation, and its components require precise temperature control to ensure optimal performance and longevity.

Traditional systems often struggle to maintain the necessary cooling efficiency for the e-axle, leading to potential overheating and thermal stress. This not only reduces the performance and lifespan of the e-axle components but also impacts the overall efficiency and reliability of the vehicle. Additionally, the integration of multiple cooling circuits within the limited space of a vehicle presents further complications, as does the need to balance cooling efficiency with energy consumption to avoid draining the vehicle's battery.

### SUMMARY OF THE INVENTION

It is thus an objective to overcome the aforementioned problems and to provide an improved thermal management system compared to the prior art.

It is a further object of the present invention to provide a thermal management system, capable of providing adequate cooling for the e-axle, which generates significant heat during operation

These and other problems are solved by the subject matter of the attached inde-pendent claims.

Preferred embodiments may be taken from the dependent claims, and, beyond that, from the following description, in particular comprising various embodiments as covered and described in the annexed claims.

The skilled person will understand that any embodiment described in the following description is covered and comprised by the subject matter covered by the annexed claims.

The embodiments, features and combination of features as described herein in connection with the invention, as well as the combination of features as given in the annexed claims, but also any combination of features as mentioned and described in connection with the embodiments shall be considered as being disclosed herein, at least, however, shall be considered to be derivable by the skilled person.

In particular, each feature and each combination of features in the embodiments as described herein may for example be claimed in a different combination, in particular different claim category, at least because the skilled person will recognize that each and every combination of the features mentioned herein is suitable for contributing to solving the underlying problem.

Further, each feature and each combination of features in the claims and used in the description below may be used and claimed independently from the respective claimed subject matter, independently from claim dependencies and back-references, and independently from the claim category in which the feature is claimed. For example, in an arbitrary combination selected from one or more claims, one or more embodiments as set forth herein below and/or from the annexed figures may be envisaged.

The above-described problems are advantageously solved by a thermal management system according to the present invention. This thermal management system is particularly useful, when employed in a vehicle, particularly an electro- or hybrid vehicle.

The inventive thermal management system comprises a first refrigerant circuit, which comprising a cooling device, particularly a heat pump system having at least one compressor, a first heat exchange means, particularly an evaporator, optionally a second heat exchange means, particularly a condenser, and optionally, an expansion valve.

A thermal management system is defined as a system that regulates the temperature of at least two consumers. A consumer is therefore a device that needs to be cooled or heated. One consumer can be for cooling and another for heating. These consumers can even be part of a single cooling circuit, as will be further illustrated below.

Preferably, a consumer can be an electric machine. Furthermore, a consumer can be an inverter. Additionally or alternatively, a consumer can be a passenger compartment. Advantageously, a consumer can be a battery. In the scope of the present invention, a consumer may particularly also be an electrical consumer of the e-axle system, such as electric motor and power electronics of the e-axle, or the like.

In the present invention, tempering is understood to mean cooling or heating.

The thermal management system comprises at least one refrigerant circuit and optionally at least one coolant circuit. In this case, at least one cooling device is arranged in the refrigerant circuit. This cools the refrigerant. The coolant circuit is tempered by the refrigerant and is in direct connection with at least one consumer.

Furthermore, the thermal management system can comprise at least one, in particular exactly two, coolant circuits and one refrigerant circuit. In this case, at least one cooling device is arranged in the refrigerant circuit. The refrigerant is tempered by the cooling device. The coolant circuits are tempered by the refrigerant and are in direct connection with the consumers.

Preferably, one of the coolant circuits can be provided as a high-temperature circuit and the other coolant circuit as a low-temperature circuit. The high-temperature circuit is thermally connected to the refrigerant circuit at a first point and the low-temperature circuit at a second point. The first point has a higher temperature than the second point. In particular, the high-temperature circuit can be connected downstream of a compressor. Preferably, the low-temperature circuit can be connected downstream of an expansion valve.

The temperature to which the high-temperature circuit is tempered, particularly cooled, can be, for example, 40°C. This temperature can be used simultaneously for heating a consumer such as the passenger compartment and for cooling another consumer such as an electric machine.

The low-temperature circuit is tempered to a lower temperature than the high-temperature circuit. This allows the cooling capacity to be concentrated on the low-temperature circuit, to which the largest consumer in terms of cooling capacity, e.g., power electronics, is connected. This optimizes the provision of cooling capacity and allows, for example, the compressor to be smaller.

A radiator can preferably be arranged in the low-temperature circuit.

Advantageously, a passenger compartment and/or an electric machine and/or a battery can be arranged as consumers in the high-temperature circuit. Furthermore, a power electronics arrangement, in particular, an inverter, can be arranged in the low-temperature circuit.

In this case, the cooling device can be designed as a heat pump. The heat pump comprises at least one, preferably two, heat exchangers and at least one compressor. One of the heat exchangers can be designed as a condenser and the other heat exchanger as an evaporator.

Preferably, the refrigerant in the refrigerant circuit is a natural refrigerant, in particular propane. Furthermore, the coolant in the coolant circuits can be a refrigerant with a low boiling point and vapor pressure, such as a water-glycol mixture.

Preferably, the thermal management system comprises a distribution unit. The distribution unit can be used to control which circuit is connected to which circuit and to which consumer. The distribution unit is also referred to as a Fluid Control Unit (FCU). Advantageously, the distribution unit comprises a valve unit with at least one valve. The valve can be designed as a slide valve, in particular an axial slide valve or a rotary slide valve. In particular, the valve unit can comprise at least four, preferably exactly four, valves.

The distribution unit can comprise at least two housing parts. Channel structures and/or valve receiving areas can be formed on the adjacent sides of the housing parts. Alternatively, one housing part can be designed as a cover without structures, and only one housing part can have channel structures and/or valve receiving areas. It is also conceivable to provide valve receiving areas exclusively in one housing part and channel structures exclusively in the other housing part.

Furthermore, the thermal management system comprises a pump arrangement with at least one pump. Preferably, the pump arrangement can comprise at least two, in particular exactly two, pumps. At least one pump can be designed as a gerotor pump. At least one pump can be designed as a vane pump.

Alternatively, the thermal management system can also be arranged stationary, e.g., in a building.

In the thermal management system according to the present invention, particularly for a vehicle, particularly an electro- or hybrid vehicle, the system further comprises an e-axle cooling system integrated with the heat pump system, the e-axle cooling system comprising a second refrigerant cycle with a second refrigerant.

Such integration according to the present invention is of particular advantage, in that it allows for a more efficient and compact thermal management system. By integrating the e-axle cooling system with the heat pump system, the overall system can leverage shared components and reduce redundancy. This results in several technical benefits, such as an enhanced efficiency, which is achieved through optimized heat exchange between the first and second refrigerant cycles, improving the overall thermal efficiency of the system. This leads to better energy utilization and reduced power consumption. Additionally, combining the e-axle cooling system with the heat pump system reduces the need for separate cooling systems, saving space and reducing the weight of the vehicle. This is particularly beneficial for electric and hybrid vehicles where space and weight are critical factors.

The above problems are also advantageously overcome in a second aspect of the present invention by a vehicle, particularly electric or hybrid vehicle, comprising a thermal management system according to the present invention. With this regard, the integration of the thermal management system according to the present invention in a vehicle, particularly an electric or hybrid vehicle, offers significant technical advantages, including enhanced efficiency, reduced complexity and weight, improved cooling performance, simplified maintenance, and operational flexibility.

The above problems are also advantageously overcome in a third aspect of the present invention by a method for managing thermal loads in a vehicle, particularly an electro- or hybrid vehicle, preferably with a thermal management system according to the present invention.

The method of the present invention thereby comprises at least the following steps of:
- providing a first refrigerant circuit, which comprising a cooling device, particularly a heat pump system with
   ∘ at least one compressor,
   ∘ a first heat exchange means, particularly an evaporator,
   ∘ optionally a second heat exchange means, particularly a condenser,
   ∘ optionally, an expansion valve.

The method according to the present invention comprises a step of providing an e-axle cooling system integrated with the heat pump system, the e-axle cooling system comprising a second refrigerant cycle for circulating a second refrigerant for cooling at least one electric consumer of the e-axle, condensing the second refrigerant using the evaporator of the first refrigerant circuit.

The inventive method may further, optionally, comprise a step of circulating a coolant through first coolant circuit, which is a low temperature circuit, in particular a cooling water circuit, which flows through the first heat exchange means, particularly the evaporator,

The inventive method may further, optionally, comprise a step of circulating heating water through a second coolant circuit, which is a high temperature circuit, which flows through the second heat exchange means, particularly the compressor.

It shall be noted, that the steps given above do not necessarily have to be carried out in the given order. The provided steps may be carried out in any other suitable order.

However, the order as given above may apply for particular variants of the method.

It shall be noted, that the steps given above do not necessarily have to be carried out in the given order. The provided steps may be carried out in any other suitable order.

However, the order as given above may apply for particular variants of the method. For example, securing the bearing section to the supporting plate may be performed prior to releasably secure the one or more components to the one or more mounting interfaces.

It will be immediately acknowledged by a person skilled in the art that a feature, embodiment, effect or advantage described herein in connection with the inventive thermal management system, may also be a feature, embodiment, effect or advantage of the inventive method, respectively, and vice versa.

Within the present application, terms such as "lateral" or "laterally", "rear", "frontal", "upper", "lower", "bottom", "opposite", "inner", "outer" or the like, as used herein, which de-scribe the position of a first object relative to another object, preferably refer to the relative position of a respective part or object with regard to its position fully mounted for its intended use.

In an advantageous embodiment of the inventive device and/or the inventive method said second refrigerant in the second refrigerant cycle has a lower boiling point and lower vapor pressure than the first refrigerant in the first refrigerant circuit.

The term "lower boiling point" as used herein preferably refers to a boiling point of less than 50°C, particularly of about 47.5°C.

The term "lower vapor pressure" as used herein preferably refers to a vapor pressure of less than 45Kpa, particularly of about 43.7 Kpa.

This is of particular advantage, in that the lower boiling point of the second refrigerant allows it to absorb heat more efficiently at lower temperatures, which is particularly useful for cooling components that generate significant heat, such as electric motors and power electronics. Additionally, the lower vapor pressure of the second refrigerant reduces the risk of high-pressure build-up within the system, enhancing safety and reliability. This combination of properties ensures that the thermal management system operates more effectively, maintaining optimal temperatures for critical components and improving the overall performance and longevity of the vehicle.

The second refrigerant thereby preferably is YRO-10 or YL-10.

In a further advantageous embodiment of the inventive thermal management system and/or inventive vehicle and/or the inventive method, the second refrigerant cycle is configured to operate independently of the first refrigerant circuit. This allows the thermal management system to manage different thermal loads separately. The independent operation of the second refrigerant cycle ensures that the cooling requirements of the e-axle components, such as the electric motor and power electronics, can be met without affecting the performance of the first refrigerant circuit. This separation enhances the overall efficiency and flexibility of the system, enabling it to adapt to varying thermal demands and driving conditions. Additionally, it simplifies the control and maintenance of the thermal management system, contributing to improved reliability and reduced operational complexity.

In a further advantageous embodiment of the inventive thermal management system and/or inventive vehicle and/or the inventive method, the e-axle cooling system further comprises a heat exchanger for transferring heat between the second refrigerant of the second refrigerant cycle and the low temperature circuit.

The heat exchanger facilitates efficient thermal energy transfer, ensuring that excess heat generated by the e-axle components is effectively dissipated into the low temperature circuit. This helps maintain optimal operating temperatures for critical components such as the electric motor and power electronics, enhancing their performance and longevity. Additionally, by integrating the heat exchanger, the system can achieve better overall thermal management, contributing to improved energy efficiency and reliability of the vehicle. This configuration also allows for more precise control of the thermal loads, ensuring that each part of the system operates within its ideal temperature range.

In a further advantageous embodiment of the inventive thermal management system and/or inventive vehicle and/or the inventive method, the second refrigerant cycle includes a hydraulic pump to ensure the circulation of the second refrigerant in the second refrigerant cycle.

The hydraulic pump maintains a consistent flow of the second refrigerant, which is crucial for effective heat transfer and cooling performance. By ensuring continuous circulation, the pump helps to prevent hotspots and maintain uniform temperatures across the system. This enhances the cooling efficiency of the e-axle consumers, such as the electric motor and power electronics, thereby improving their performance and longevity. Additionally, the use of a hydraulic pump allows for precise control of the refrigerant flow rate, enabling the system to adapt to varying thermal loads and driving conditions.

In a further advantageous embodiment of the inventive thermal management system and/or inventive vehicle and/or the inventive method, the evaporator of the first refrigerant circuit is fluidically connected to the second refrigerant in the second refrigerant cycle of the e-axle cooling system.

By establishing a fluidic connection between the evaporator and the second refrigerant cycle, the system can efficiently transfer heat from the second refrigerant to the first refrigerant circuit. This enhances the cooling performance of the e-axle consumers, such as the electric motor and power electronics, by ensuring that excess heat is effectively absorbed and dissipated. Additionally, this configuration allows for a more integrated and streamlined thermal management system, reducing the need for separate cooling components and improving overall system efficiency. The fluidic connection also facilitates better control of the thermal loads, ensuring that each part of the system operates within its optimal temperature range.

In a further advantageous embodiment of the inventive thermal management system and/or inventive vehicle and/or the inventive method, the evaporator of the first refrigerant circuit is used to condense the second refrigerant in the second refrigerant cycle of the e-axle cooling system.

By utilizing the evaporator of the first refrigerant circuit to condense the second refrigerant, the system achieves efficient heat transfer and cooling performance. This integration allows the second refrigerant to release its absorbed heat effectively, ensuring that the e-axle consumers, such as the electric motor and power electronics, are maintained at optimal operating temperatures. Additionally, this configuration reduces the need for separate condensation components, leading to a more compact and streamlined thermal management system.

In a further advantageous embodiment of the inventive thermal management system and/or inventive vehicle and/or the inventive method, the second refrigerant cycle is configured to cool at least one electrical consumer, selected from the group comprising electric motor and power electronics of the e-axle.

By specifically cooling of critical electrical consumers, the system ensures that these components operate within their optimal temperature ranges, thereby enhancing their performance and longevity. The dedicated cooling of the electric motor and power electronics helps prevent overheating, which can lead to reduced efficiency and potential damage. Additionally, this configuration allows for more precise thermal management, ensuring that the cooling needs of these high-heat-generating components are met effectively. This ensures that the e-axle consumers function smoothly under various operating conditions.

### Brief Description of the Figures

The present invention will be described in further detail with reference to the drawings from which further features, embodiments and advantages may be taken, and in which:
Fig. 1 shows a schematical flow diagram of a thermal management system of the prior art;
Fig. 2 shows a schematical flow diagram of a thermal management system according to a first embodiment of the present invention.

### Detailed Description of the Figures

The features of the present invention disclosed in the specification, the claims, examples and/or the figures may both separately and in any combination thereof be material for realizing the invention in various forms thereof.

In the embodiments shown in the figures, elements similar or identic in function are designated with like reference signs. It is noted, that the figures may not be true to scale with respect to each other.

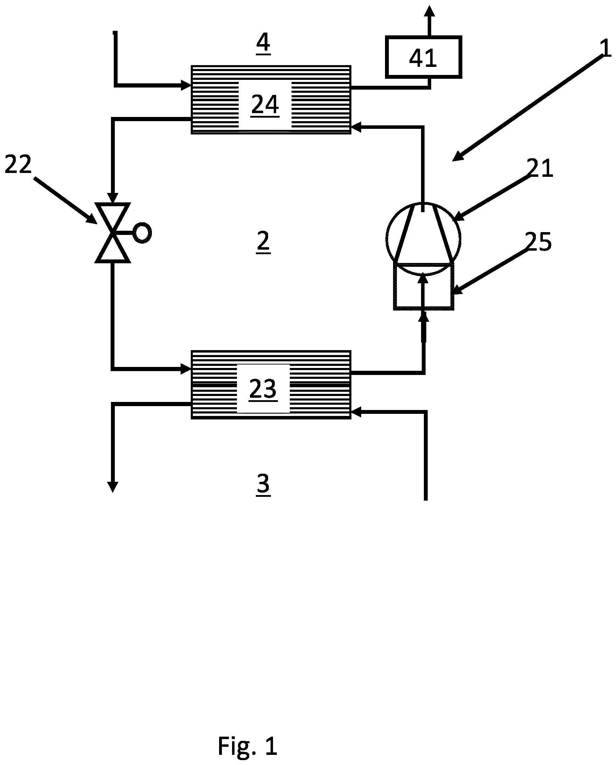

Fig. 1 shows a thermal management system according to the prior art, which may particularly employed in standard combustion vehicles. Such thermal management system usually comprises a refrigerant circuit 2 with a cooling device 1, such as a heat pump system 1 in the present case. The heat pump 1 functions by compressing the refrigerant using the compressor 21, which increases the refrigerant's pressure and temperature. The compressor 21, here is driven by an electric machine 25. The heated refrigerant then flows through a second heat exchange means 24, particularly a condenser 24, where it releases heat to the high temperature circuit 4 and condenses into a liquid. Next, the liquid refrigerant passes through an expansion valve 22, where it undergoes a pressure drop and cools down significantly. The cooled refrigerant then enters a first heat exchange means 23, particularly an evaporator 23, where it absorbs heat from the low temperature circuit 3, causing it to evaporate and complete the cycle.

This means, in this example, there are two coolant circuits 3 and 4. The first coolant circuit 3, which is the low temperature circuit 3, particularly a cooling water circuit, allows coolant to flow through the evaporator 23. This circuit 3 is responsible for that the refrigerant in the cycle 2 is absorbing heat from the refrigerant in the low temperature circuit 3, thereby cooling the refrigerant in cycle 2, which thus can cool the consumers connected to this circuit 3. The second coolant circuit 4, which is a high temperature circuit 4, allows coolant to flow through the condenser 24. This circuit is designed to feed the heat of the refrigerant in the cycle 2 into the high temperature circuit 4 and thus warm and heat consumers connected to the high temperature circuit 4. In the present case, the high temperature circuit 4 may comprise an additional heater 41, e.g. a PTC heater 41.

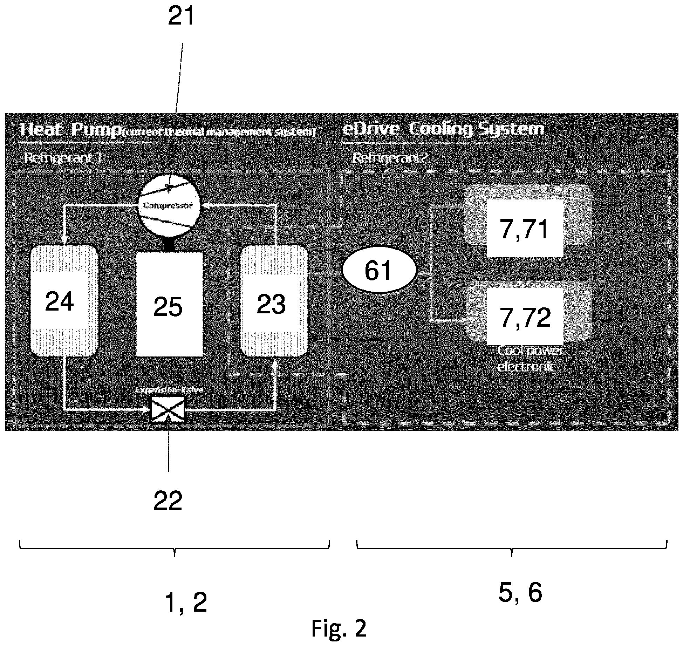

Fig. 2 shows a schematical flow diagram of the thermal management system according to the present invention according to a first inventive embodiment. Basically, Fig. 2 illustrates a thermal management system which comprises the thermal management system of Fig. 1. This means, a first refrigerant circuit 2 is provided that comprising a cooling device 1 in the form of a heat pump system 1 with a compressor 21, a condenser 24 as a second heat exchange means 24, an expansion valve 22, and as a first heat exchange means 23, in the form of an evaporator 23. Also here a first coolant circuit 3 in the form of a low temperature circuit 3 may be provided configured flow its cooling water through the evaporator 23 and a second coolant circuit 4, which is a high temperature circuit 4 may be provided flowing through the compressor 21.

However, different from Fig. 1 and the prior art, the thermal management system of the present invention further comprises the e-axle cooling system 5, which is integrated with the heat pump system 1. This e-axle cooling system 5 comprises a second refrigerant cycle 6 with a second refrigerant. The second refrigerant in the second refrigerant cycle 6 is provided to cool electrical consumers 7, here the electric motor 71 and the power electronics 72 of the e-axle. This second refrigerant particularly is chosen such that it has a lower boiling point and lower vapor pressure than the first refrigerant in the first refrigerant circuit 2, for example, YRO-10 or YL-10. While the first refrigerant is, for example, R290. The integration of the e-axle second refrigerant cycle 6 into the heat pump system 1 is facilitated by the evaporator 23 of the first refrigerant circuit 2, which is also used to condense the second refrigerant in the second refrigerant cycle 6 of the e-axle cooling system 5. In this way, the evaporator serves as a "link" between the two refrigerant cycles 2 and 6. The first refrigerant of the first refrigerant cycle 2 and the second refrigerant of the second refrigerant 6 thus exchange heat in the evaporator 23, resulting in an energy exchange between cycles 2 and 6. However, the second refrigerant cycle 6 is configured also to operate independently of the first refrigerant circuit 2, however, the evaporator 23 of the first refrigerant circuit 2 is fluidically connected to the second refrigerant in the second refrigerant cycle 6 of the e-axle cooling system 5. Thus the second refrigerant cycle 6 can be operated independently from or integrated into refrigerant cycle 2 and the classical heat pump system 1, based on the needs of the system and the intended function at the time of choice. This can be easily achieved by providing respective valves provided to control that the second refrigerant flows through the evaporator 23 or bypasses it.

The e-axle cooling system 5 further comprises a heat exchanger 51 for transferring heat between the second refrigerant of the second refrigerant cycle 6 and the low temperature circuit 3. The second refrigerant cycle 6 also includes a hydraulic pump 61 to ensure the circulation of the second refrigerant in the second refrigerant cycle 6.

The embodiments in the figures may relate to preferred embodiments, while all elements and features described in connection with embodiments may be used, as far as appropriate, in combination with any other embodiment and feature as dis-cussed herein, in particular related to any other embodiment discussed further above.

### List of Reference Numerals

- 1:: heat pump system
- 2:: first refrigerant circuit
- 21:: compressor
- 22:: expansion valve
- 23:: evaporator
- 24:: condenser
- 25:: electric machine
- 3:: low temperature circuit, first coolant circuit
- 4:: high temperature circuit, second coolant circuit
- 41:: PTC heater
- 5:: e-axle cooling system
- 51:: heat exchanger
- 6:: second refrigerant circuit
- 61:: hydraulic pump
- 7:: electrical consumer
- 71:: electric motor
- 72:: power electronics

## Claims

1. A thermal management system, particularly for a vehicle, particularly an electro- or hybrid vehicle, comprising:
a first refrigerant circuit (2), which comprising a cooling device (1), particularly a heat pump system (1) with
∘ at least one compressor (21),
∘ a first heat exchange means (23), particularly an evaporator (23),
o optionally a second heat exchange means (24), particularly a condenser (24),
o optionally, an expansion valve (22),
optionally, a first coolant circuit, which is a low temperature circuit (3), in particular a cooling water circuit, which flows through the first heat exchange means (23), particularly the evaporator (23),
optionally, a second coolant circuit, which is a high temperature circuit (4), which flows through the second heat exchange means (24), particularly the compressor (21), and
further comprising
an e-axle cooling system (5) integrated with the heat pump system (1), the e-axle cooling system (5) comprising a second refrigerant cycle (6) with a second refrigerant.

2. The thermal management system according to claim 1, wherein the second refrigerant in the second refrigerant cycle (6) has a lower boiling point and lower vapor pressure than the first refrigerant in the first refrigerant circuit (2), and wherein the second refrigerant preferably is YRO-10 or YL-10.

3. The thermal management system according to claim 1 or claim 2, wherein the second refrigerant cycle (6) is configured to operate independently of the first refrigerant circuit (2).

4. The thermal management system according to any of the preceding claims, wherein the e-axle cooling system (5) further comprises a heat exchanger (51) for transferring heat between the second refrigerant of the second refrigerant cycle (6) and the low temperature circuit (3).

5. The thermal management system according to any of the preceding claims, wherein the second refrigerant cycle (6) includes a hydraulic pump (61) to ensure the circulation of the second refrigerant in the second refrigerant cycle (6).

6. The thermal management system according to any of the preceding claims, wherein the evaporator (23) of the first refrigerant circuit (2) is fluidically connected to the second refrigerant in the second refrigerant cycle (6) of the e-axle cooling system (5).

7. The thermal management system according to any of the preceding claims, wherein the evaporator (23) of the first refrigerant circuit (2) is used to condense the second refrigerant in the second refrigerant cycle (6) of the e-axle cooling system (5).

8. The thermal management system according to any of the preceding claims, wherein the second refrigerant cycle (6) is configured to cool at least one electrical consumer (7), selected from the group comprising electric motor (71) and power electronics (72) of the e-axle.

9. Vehicle, particularly electric or hybrid vehicle, comprising a thermal management system according to any one of claims 1 to 7.

10. A method for managing thermal loads in a vehicle, particularly an electro- or hybrid vehicle, preferably with a thermal management system according to any one of claims 1 to 8, the method comprising the steps of:
- providing a first refrigerant circuit (2), which comprising a cooling device (1), particularly a heat pump system (1) with
∘ at least one compressor (21),
∘ a first heat exchange means (23), particularly an evaporator (23),
∘ optionally a second heat exchange means (24), particularly a condenser (24),
∘ optionally, an expansion valve (22),
optionally, circulating a coolant through first coolant circuit, which is a low temperature circuit (3), the low temperature circuit (3) flowing through the evaporator (23),
optionally, circulating heating water through a second coolant circuit, which is a high temperature circuit (4), the high temperature circuit (4) flowing through the compressor (21),
providing an e-axle cooling system (5) integrated with the heat pump system (1), the e-axle cooling system (5) comprising a second refrigerant cycle (6) for circulating a second refrigerant for cooling at least one electric consumer (7, 71, 72) of the e-axle,
condensing the second refrigerant using the evaporator (23) of the first refrigerant circuit (2).
